# EUROPEAN PATENT SPECIFICATION

(11) **EP 1 516 041 B1**
(45) Date of publication and mention of the grant of the patent: **28.06.2006**
(21) Application number: 03730138.9
(22) Date of filing: 30.05.2003
(51) Int. Cl.: C11D 3/28, C11D 3/39, C11D 3/395, C11D 7/18, C11D 7/32, C11D 7/38, C11D 7/54

(54) **USE OF TRANSITION METAL COMPLEXES WITH NITROGEN-CONTAINING POLYDENTATE LIGANDS AS A BLEACHING CATALYST AND BLEACHING AGENT COMPOSITION**
VERWENDUNG VON ÜBERGANGSMETALLKOMPLEXEN MIT STICKSTOFFHALTIGEN MEHRZÄHNIGEN LIGANDEN ALS BLEICHKATALYSATOREN UND BLEICHMITTELZUSAMMENSETZUNG
UTILISATION DE CATALYSEURS DE BLANCHIMENT A BASE DE COMPLEXES DE METAUX DE TRANSITION A LIGANDS POLYDENTES AZOTES ET COMPOSITIONS D'AGENTS DE BLANCHIMENT

(30) Priority: 21.06.2002 DE 10227774
(43) Date of publication of application: 23.03.2005
(73) Proprietor: Degussa AG, 40474 Düsseldorf (DE)
(72) Inventor: KUNZ, Ulrike, 63571 Gelnhausen (DE); JAKOB, Harald, 63594 Hasselroth (DE); DEL GROSSO, Michael, 63579 Freigericht (DE); DORFER, Astrid, 63584 Gründau (DE)
(86) International application number: PCT/EP2003/005674
(87) International publication number: WO 2004/000986

(56) References cited:
- WO-A-02/16330
- WO-A-98/03263
- US-A- 5 969 171
- US-A1- 2001 003 737
- US-A1- 2002 058 598
- US-A1- 2002 134 965
- US-A1- 2002 165 110
- US-B1- 6 241 779

## Description

The invention relates to the use of transition metal complexes with nitrogen-containing polydentate ligands as a bleaching catalyst and to bleaching agent compositions comprising such a bleaching catalyst. The activity of peroxy compounds in washing, bleaching and cleaning processes at low temperature is increased by the transition metal complexes to be used according to the invention.

Inorganic peroxy compounds, in particular hydrogen peroxide and compounds which liberate hydrogen peroxide, such as sodium perborate monohydrate, sodium perborate tetrahydrate and sodium percarbonate, have been employed for a long times as oxidizing agents in bleaching, washing and cleaning processes. Sufficiently rapid bleaching of soiled textiles requires a temperature of at least 80°-C.

The oxidizing action of inorganic peroxygen compounds at reduced temperature can be improved by co-using so-called bleaching activators. Bleaching activators are, in particular, N- and O-acyl compounds, for example polyacylated alkylenediamines, such as tetraacetylethylenediamine (TAED), acetylated glycolurils, N-acetylated hydantoins, diketopiperazines, carboxylic acid anhydrides, carboxylic acid esters, such as, in particular, sodium nonanoyloxy-benzenesulfonate (NOBS), and acylated sugar derivatives.

By using a combination of a peroxy compound and an activator, bleaching can be carried out at about 60ºC instead of above 80ºC without a loss in activity.

In efforts to be able to carry out washing and bleaching below 60ºC, the use of transition metal complexes, in particular complexes of manganese, iron, cobalt and copper with at least one polydentate organic ligand, in particular nitrogen-containing ligands, has been described in many documents.

Reference is made by way of example to the complexes described in the following documents: EP 0 544 490, WO 98/54282, WO 00/12808, WO 00/60043, WO 00/52124, EP 0 392 592, WO 99/64156 and WO 00/12667.

Although numerous different transition metal complexes are thus known for the use aimed for, they only partly meet some of the expectations imposed on them.

Thus, if the reactivity is too high there is the risk of a change in colour of dyed textiles, and in the extreme case oxidative damage to the fibres. Furthermore, some complexes decompose the peroxygen compound without a bleaching action, are insufficiently stable to hydrolysis or are susceptible to oxidation.

The doctrine of WO 00/32731 is bleaching catalysts with di(2-pyridyl)methylamine organic nitrogen-containing ligand. This catalyst is suitable for increasing the oxidizing and bleaching action of hydrogen peroxide. A further increase is achieved by combination of such a bleaching catalyst with a so-called activator which can form a peroxycarboxylic acid in the presence of a source of hydrogen peroxide. As has been shown in practice, different property profiles of bleaching catalysts which the products known to date do not achieve in all points are required in washing, bleaching and cleaning compositions.

The international application WO 98/03263 discloses homogeneous oxidation catalysts, these being transition metal complexes with a macrocyclic ligand. The ligand includes four donor atoms, such as nitrogen, usually in the form of amides, so that the ligand is a tetraamide. Further similar macrocyclic ligands and chelate complexes are the doctrine of WO 99/64156, where the ligand can contain four amidic or also two aminic and two amidic nitrogen atoms. Such ligands are indeed stable to oxidation, but the activity as a bleaching catalyst leaves something to be desired.

The object of the present invention is accordingly to provide further transition metal complexes with at least one nitrogen-containing polydentate ligand which are suitable as a bleaching catalyst for activation of a peroxy compound and preferably also oxygen.

It has been found that transition metal complexes with a transition metal from the series consisting of manganese, iron, cobalt or copper are very active and gentle bleaching catalysts if these contain at least one nitrogen-containing polydentate ligand of the general formula (I) according to the claims.

The invention thus provides the use of a transition metal complex with at least one nitrogen-containing polydentate ligand as a bleaching catalyst for activation of a peroxy compound or of oxygen, wherein the complex is mono- or polynuclear, the transition metal (M) is manganese, iron, cobalt or copper and the nitrogen-containing polydentate ligand (L), at least one of which is present, has the general formula (I) 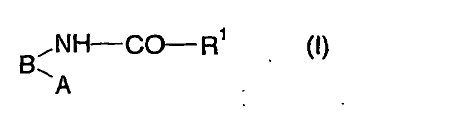 wherein A represents either the group -NH-CO-R² or the group -C=N-OZ, 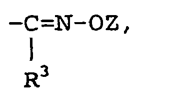 the bridge member B is chosen from the series consisting of 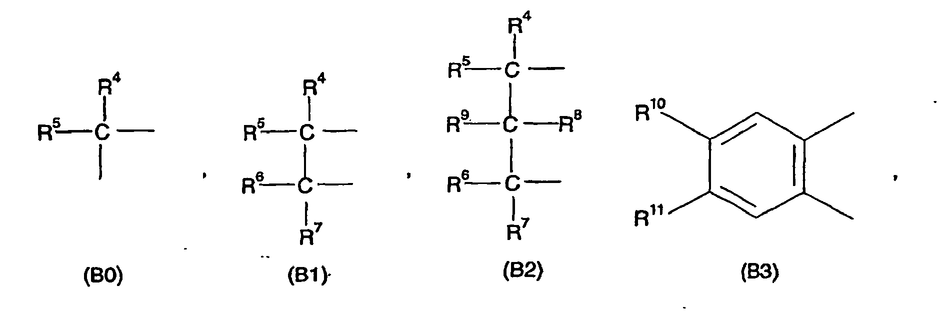 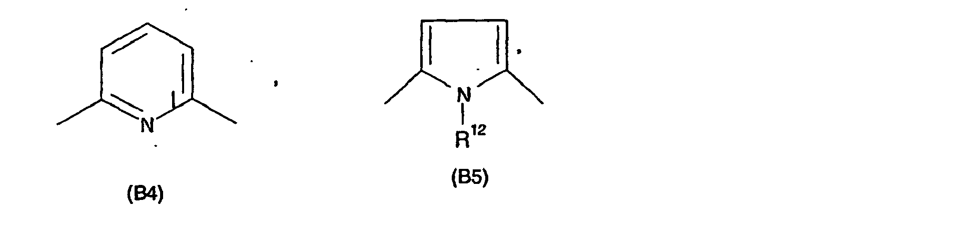 wherein R⁴ to R⁷ independently of one another represent a radical from the series consisting of H, arylalkyl, aryl, heteroaryl,
wherein R⁴ with R⁵ or/and R⁶ with R⁷ or R⁴ with R⁶ together with the atom(s) carrying them can form a five-to seven-membered, in particular five- or six-membered cycloaliphatic or O- or N-heterocyclic ring, which can also contain a double bond,
and wherein the structural elements of the general formulae (B0) to (B5) have a total of 2 to 20 C atoms, R⁸ and R⁹ independently of one another can represent a radical from the series consisting of H, methyl or together can represent carbonyl oxygen,
R¹⁰ and R¹¹ independently of one another can represent a radical from the series consisting of H, (C₁-C₄)alkyl, halogen or together can represent a fused-on aromatic ring
and R¹² can represent H or methyl,
the radicals R¹ and R² independently of one another can represent a radical from the series consisting of -COOH, -CONH₂, -CONHR¹³, C(CH₃)₂OH, 2-pyridyl, 1,3-oxazolin-2-yl, imidazol-2-yl or R¹-R² together can represent the radical 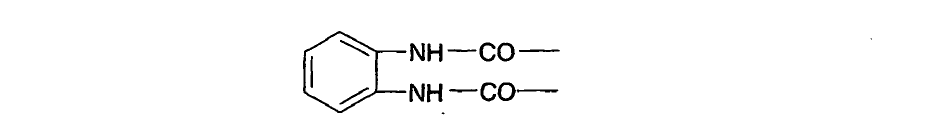 or 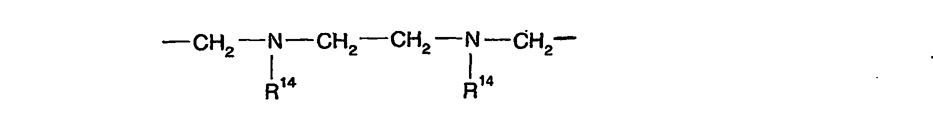 wherein R¹³ can be chosen from the series consisting of linear, branched or cyclic alkyl, aryl, heteroaryl, in particular 2-pyridyl, 1,3-oxazolin-2-yl and imidazol-2-yl and heteroalkylmethyl,
R¹⁴ can be chosen from the series consisting of substituted or unsubstituted, linear, branched or cyclic alkyl, benzyl, aryl, heteroaryl, heteroarylmethyl, and
R³ represents a radical from the series consisting of alkyl, aryl, heteroaryl, arylalkyl, heteroarylalkyl and
Z represents H, alkyl, aryl, dialkylaminoethyl, heteroaryl,
and in the case of the oximes R¹ additionally can represent the radical 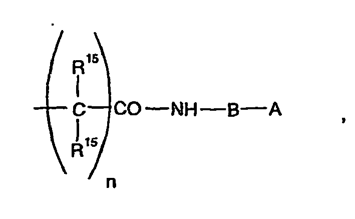 wherein n is 0 or 1, R¹⁵ H or alkyl, and the group R¹⁵-C-R¹⁵ can be cycloalkyl.

The subclaims relate to preferred embodiments of the use according.to the invention.

The present invention also provides the bleaching agent composition defined in the claims, which comprises a peroxy compound, in particular a source of hydrogen peroxide, and a transition metal complex to be used according to the invention in an amount effective for activation. The subclaims of the bleaching agent composition relate to preferred embodiments thereof.

The transition metal complex to be used according to the invention can be mono- or polynuclear and contains as the transition metal one from the series consisting of manganese in the valency level II to IV, iron in the valency level II or III, cobalt in the valency level II or III and copper in the valency level I or II. Depending on the number of heteroatoms capable of ligand formation and their steric alignment in the ligand L, the complex can contain one or more transition metal atoms, preferably one or two metal atoms of the same type. In general the complex has the general formula

[LₘMₙXₒ]Yₚ

In this formula, L denotes the ligand to be used according to the invention, M denotes a transition metal atom from the abovementioned series, X denotes a coordinating neutral or charged mono- or polyvalent ligand for saturation of the ligand sphere and Y denotes a non-coordinating counter-ion, which can be anionic or, if the sum of anionic ligands X and ionic substituents in the ligand L exceeds the sum of the valency of the metal atoms M, can also be cationic. The index m represents an integer in the range from 1 to 4, in particular 1 or 2, the index n represents an integer, preferably 1 or 2, the index o represents zero or an integer in the range from 1 to 8 and the index p represents zero or an integer in order to achieve a complete charge compensation. Y can also be a substituent, such as carboxylate or sulfonate, in the ligand.

The polydentate ligand L to be used according to the invention has the structure according to the general formula (I) already shown. According to a preferred embodiment, the complexes are cobalt complexes with the ligand B (NH-CO-R¹)₂, wherein, particularly preferably, B represents optionally substituted ortho-phenylene and/or R¹ represents a radical from the series consisting of COOH, CONHR', C(CH₃)₂OH where R' is H, (C₁-C₄)-alkyl or substituted alkyl and 2-pyridyl.

The bleaching activators to be used according to the invention can in some cases also be macrocyclic, but the ligands differ from the ligands according to WO 98/03263 and WO 99/64156 by at least one feature.

Ligands of preferred bleaching activators are open-chain, that is to say not macrocyclic. Several of these substances are more easily obtainable than the macrocyclic ligands which are already known. Surprisingly, the substances of sometimes simple structure with oxamic acid or oxamide structural elements show a surprisingly good bleaching-activating action. Apart from on the ligand structure and on the metal atom of the complex, the action also depends in part on the coloured substance to be bleached.

A new genus of active transition metal complexes contain a chelate ligand with four nitrogen donor atoms, two of which have an amide structure and two N atoms of which are the constituent of an N-heterocyclic ring.

Finally, ligands with two amide groups and two oxime groups are interesting compounds for complexing of Mn, Fe, Co and Cu for the purpose of obtaining active bleaching activators.

The cyclic bridge members B can also have functional or non-functional substituents, for example OH, NH₂, COOH, SO₃H, COOMe, SO₃Me, wherein Me represents an alkali metal, N⁺ (C₁-C₄-alkyl)₄, F, Cl, alkoxy, in particular (C₁-C₄)alkoxy, alkyl, in particular (C₁-C₄)alkyl, phenyl, benzyl, pyridyl, 2-pyridylmethyl.

The radicals R¹ and R² in the ligand L can be identical or different and represent H, linear, cyclic or branched alkyl or heteroalkyl, aryl, heteroaryl, arylalkyl and heteroarylalkyl. Examples are methyl, ethyl, i-propyl, tert-butyl, benzyl, phenyl, pyridyl, in particular 2-pyridyl, 1,3-oxazolin-2-yl, 1,3-oxazolin-2-methyl and 2-pyridylmethyl.

The radical R³ in the ligand L can be aryl, heteroaryl, alkoxy, aryloxy, heteroaryl, alkyl and arylalkyl. The examples mentioned above for R¹ and R² also apply here. If R³ represents alkoxy or aryloxy, it is preferably methoxy, ethoxy, 2-hydroxyethoxy, 2-aminoethoxy, 2-N,N-di(C₁₋C₄)alkylaminoethoxy and phenoxy.

Both the radicals R¹ to R³ and bridge members (B1 to B5) can have one or more functional or non-functional substituents. These are those substituents such as have already been disclosed in connection with the description of the bridge member B. According to particularly preferred embodiments, the heterocyclic or heteroaromatic ring systems bonded to the bridge member B contain one or more linear or branched (C₁-C₄)alkyl groups, in particular methyl, isopropyl and tert-butyl, and furthermore phenyl, benzyl, 2-pyridylmethyl or -ethyl or 4-imidazolylmethyl or -ethyl.

According to a further preferred embodiment, one or more radicals from the series consisting of R¹ to R¹⁵ or the nitrogen-containing ring systems formed therefrom contain hydrophilic substituents in order to increase the solubility of the complex. Examples of these are salt-forming functional substituents and hydroxyalkoxy groupings, which additionally can also contain one or more ether bridges.

The chemical name for some examples of suitable ligands and the formulae of some complexes containing them follow below:
5,8,13,16-tetrahydro-5,8,13;16-tetraazadibenzo[a,g]cyclododecene-6,7,14,15-tetraone (TTBP) 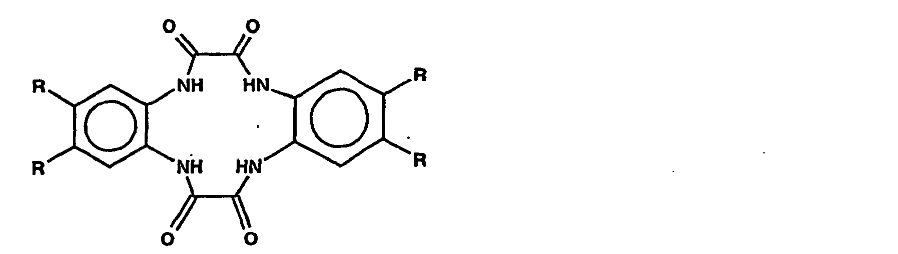
1,2-phenylene-bisoxamic acid (OPBA) 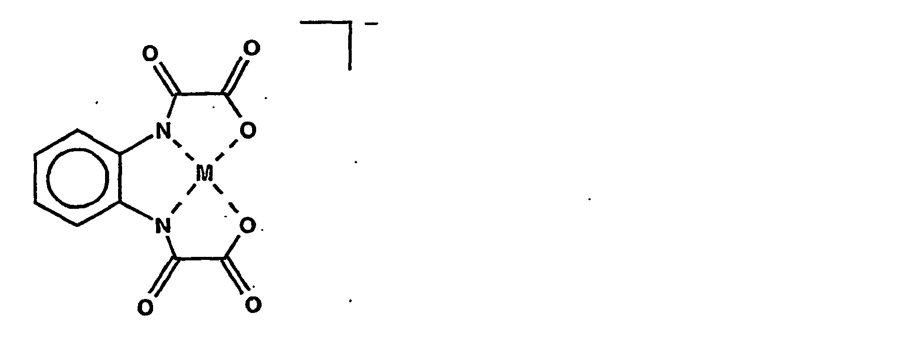
Mn complex of 1,2-phenylene-bisoxamic acid 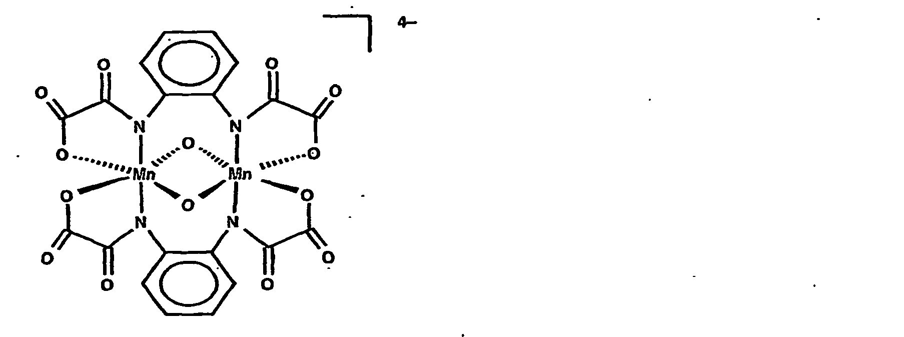
N-methyl-N'-[2-(methylaminooxalylamino)phenyl]oxalamide (PBOMA)
N-[4,5-dichloro-2-(methylaminooxalylamino)phenyl]-N'-methyloxalamide (for R = Cl) 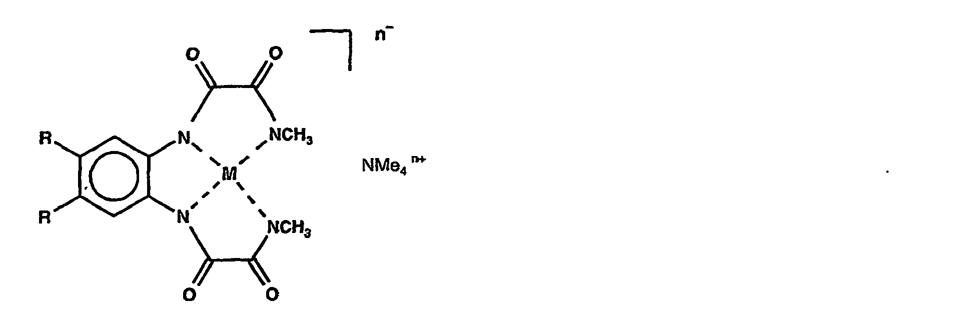
N,N'-bis(pyridine-2-carboxamido)-1,2-ethane (BPEN) 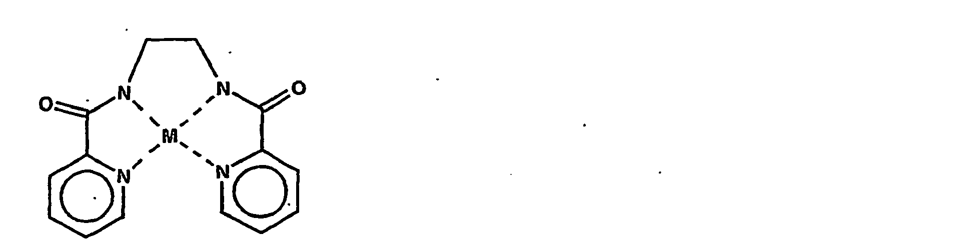
1,2-bis(pyridine-2-carboxamido)-4,5-dichlorobenzene (PCADB) 1,2-bis(4-*tert*-butylpyridine-2-carboxamido)-4,5-dichlorobenzene (for R = tBu) 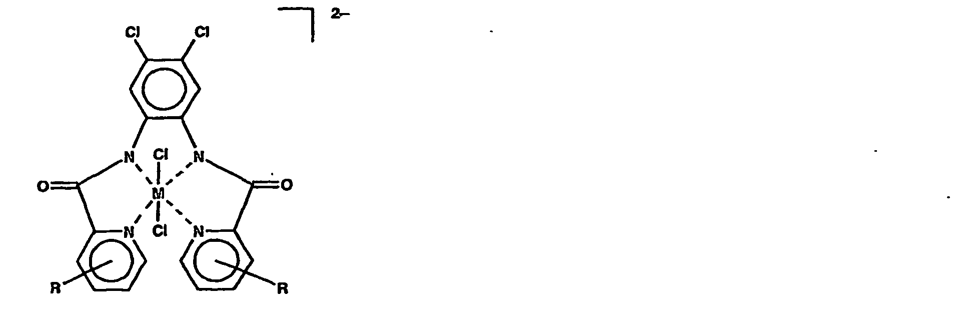
N,N'-bis[2-(1-hydroxyiminoethyl)phenyl]dimethylmalonodiamide 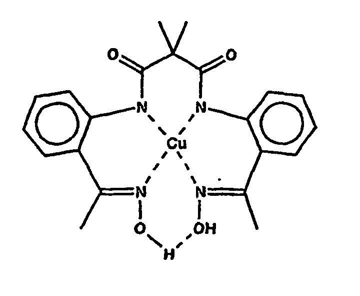
N,N'-bis[2-(2-methyl-1-oxo-1-phenyl)propyl]-dimethylmalonodiamide

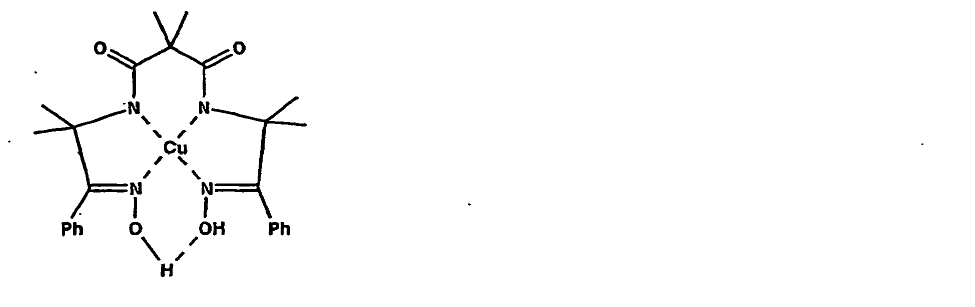

Apart from the ligand L, the catalyst can additionally contain coordinating co-ligands X. X here can be a mono-, di- or trivalent anion or a neutral molecule, which can be coordinated with the transition metal in a mono-, bi- or tridentate manner. The co-ligand is preferably the following groupings: OH⁻, O²⁻, NO₃⁻, PO₄³⁻, CN⁻, SCN⁻, HSO₄⁻, SO₄²⁻, Cl⁻, Br⁻ , F⁻, ClO₄⁻, OCN⁻, HCO₃⁻ , RS⁻ , CO₃²⁻, SO₃²⁻, RSO₃⁻, S₂O₆²⁻, RCO₂⁻; H₂O, ROH, CH₃CN, NRR'R''.

The counter-ion Y of the complex to be used can be anionic or cationic, wherein the number p is chosen such that complete charge compensation is achieved. The counter-ion can preferably have the following meaning: F⁻, Cl⁻, Br⁻, I⁻, NO₃⁻, RSO₃⁻ (R e.g. preferably CF₃) , ClO₄⁻, RCO₂⁻, PO₄³⁻, HPO₄²⁻, H₂PO₄⁻, SO₄²⁻, HSO₄⁻, CO₃²⁻, HCO₃⁻, BF₄⁻, PF₆⁻, SO₃²⁻; Li⁺, Na⁺, K⁺, Mg²⁺, Ca²⁺, Ba²⁺.

The bleaching catalysts to be used according to the invention activate elemental oxygen and peroxy compounds. Peroxy compounds are to be understood as meaning, in particular, hydrogen peroxide, compounds which liberate hydrogen peroxide, such as, in particular, sodium perborate monohydrate, sodium perborate tetrahydrate and sodium percarbonate, perphosphates and persulfates, peroxycarboxylic acids and salts thereof and peroxycarboxylic acid bleaching precursors, so-called activators, and mixtures of such substances. Suitable peroxycarboxylic acids can be aliphatic or aromatic in nature and contain one or more peroxycarboxylic acid groups. Aliphatic peroxycarboxylic acids usually contain 1 to 20 C atoms, preferably 1 to 12 C atoms, and the particularly preferred peroxycarboxylic acid is peroxyacetic acid. Among the peroxycarboxylic acids with 2 peroxycarboxylic acid groups, those having 4 to 18 C atoms are preferred; examples are diperoxyadipic acid, diperoxyazelaic acid, diperoxylauric acid and diperoxydodecanedioic acid, as well as salts of the acids mentioned, for example magnesium salts. Among the aromatic peroxycarboxylic acids there are, in particular, peroxybenzoic acid, m-chlorobenzoic acid, p-sulfonatoperoxybenzoic acid, diperoxyisophthalic acid, phthalimidopercaproic acid, 4,4'-sulfonyl-diperoxybenzoic acid and magnesium salts of these acids.

The peroxycarboxylic acids can also be formed in situ under the use conditions, and in particular from so-called activators, which are in general O-acyl compounds and N-acyl compounds. Such compounds form the corresponding peroxycarboxylic acid under perhydrolysis conditions in the presence of hydrogen peroxide or a source of hydrogen peroxide. Activators which are particularly preferably to be used are: N,N,N'N'-tetraacetylethylenediamine (TAED), Na 1-methyl-2-benzoyloxybenzene-4-sulfonate, Na nonanoyloxybenzenesulfonate (NOBS), 2-(N,N,N-trimethylammonium)ethyl-sodium 4-sulfophenylcarbonate chloride (SPCC), pentaacetylglucose, phthalic anhydride.

For activation of peroxy compounds, the transition metal complexes to be used according to the invention are in general employed in an amount of 0.0001 to 50 wt.%, in particular 0.01 to 20 wt.% and particularly preferably 0.01 to 1 wt.%, based on the peroxy compounds.

Bleaching agent compositions according to the invention comprise at least one peroxy compound and a transition metal complex to be used according to the invention in an active amount. Such compositions expediently comprise 0.0001 to 50 wt.%, in particular 0.01 to 20 wt.% and particularly preferably 0.01 to 1 wt.% of a transition metal complex with a ligand according to the invention, based on the content of peroxy compounds or precursor of one.

Bleaching agent compositions according to the invention expediently additionally comprise one or more surfactants from the series consisting of anionic, cationic, zwitterionic and nonionic surfactants, in particular surfactants such as are used in conventional washing, bleaching and cleaning compositions. Bleaching agent compositions according to the invention can furthermore also comprise organic and/or inorganic builders, such as zeolites. Further constituents can be those such as are used in conventional washing, bleaching and cleaning compositions, including enzymes, pH regulators and conventional alkali metal carriers, such as alkali metal silicate and alkali metal carbonates.

### Examples

### Example 1:

### Preparation of the dibenzotetramide 5,8,13,16-tetrahydro-5,8,13,16-tetraaza-dibenzo[a,g]cyclododecene-6,7,14,15-tetraone (TTBP)

Ligand: A solution of 5.52 g (17.9 mmol) diethyl 1,2-phenylene-dioxamate (preparation in accordance with: J. Am. Chem. Soc. 1993, *115(15),* 6738) and 1.94 g (17.9 mmol) 1,2-phenylenediamine in 250 ml toluene was heated under reflux for 8 hours. The product was then filtered off and dried in vacuo at 50ºC. Yield: 29% (pale green solid).

M complex (M = Fe, Cu, Mn, Co): 500 mg (1.54 mmol) of ligand were dissolved in 50 ml THF under argon and the solution was then cooled to -100ºC. 4.2 ml (6.17 mmol) n-butyllithium (15 per cent in pentane) were added all at once by means of a disposable syringe and, after 15 minutes, 195 mg (1.54 mmol) anhydrous iron(II) chloride were added. The reaction mixture was warmed to room temperature and stirred at this temperature for 22 hours. Atmospheric oxygen was then passed through the solution in the course of 2 hours. The red-brown solid was filtered off and dried at 50ºC in vacuo. Yield: 96%

Analogously, the Mn complex was prepared with anhydrous MnCl₂ (42%, red-brown solid), the Cu complex with anhydrous CuCl₂ (70%, dark brown solid) and the Co complex with anhydrous CoCl₂ (83%, dark red solid).

### Example 2:

### Preparation of N-methyl-N'-[2-(methylaminooxalylamino)-phenyl]oxalamide (PBOMA)

### N,N'-1,2-Phenylene-bis(oxamic acid ethyl ester)

8.40 g (60.0 mmol) ethoxalyl chloride were added dropwise to a solution of 3.30 g (30.0 mmol) 1,2-phenylenediamine in 150 ml tetrahydrofuran analogously to the instructions in *J*. *Am. Chem. Soc.* 1993, *115(15)*, 6738. The solution was heated under reflux for 0.5 hour and solid constituents were then filtered off. After distillation of the solvent, a little water was added to the oily residue, a colourless solid precipitating out. This was filtered off, washed with water and dried in vacuo. (Yield: 97%)

### Reaction of the diester with methylamine

8.24 g (87.5 mmol) methylamine (33% in methanol) were added dropwise to a solution of 9.00 g (29.2 mmol) of the diethyl ester in 50 ml ethanol analogously to the instructions in *J. Chem. Soc. Dalton Trans.* 1997, 745 at room temperature and the reaction solution was then stirred vigorously for 0.5 hour at 65ºC. The colourless solid was filtered off, washed with a little cold methanol and methyl tert-butyl ether and dried in vacuo. (Yield: 82%)

### Co complex of PBOMA:

2.62 g (7.18 mmol) cobalt(II) perchlorate dihydrate, which were dissolved in a little methanol beforehand, were added to 2.00 g (7.18 mmol) of the bisamide PBOMA and 11.0 g (30.2 mmol) tetramethylammonium hydroxide in 10 ml methanol. A pale red solid precipitated out. This was filtered off and dried. (Yield: 84%)

### Examples 3 to 8

The complexes of examples 1 and 2 and complexes prepared in an analogous manner or a manner known from the literature were investigated for their catalytic action by means of the Morin test and in some cases by means of a washing test.

Morin test: A sodium perborate monohydrate solution, a methanolic solution of tetraacetylethylenediamine and a dilute solution of the combination to be investigated are added to an aqueous Morin solution.

After intensive mixing, the extinction/transmission is measured at 400 nm after 30 minutes at 30ºC. The blank value is measured in the absence of the combination to be investigated.
Washing test: Laboratory washing apparatus type ATLAS
LAUNDER-O-METER
Temperature: 30°C
Washing time: 30 minutes
Water hardness: 14°d
Staining: tea, in some cases also grass on cotton
Detergent recipe:
12.2% anionic surfactant
7.7% nonionic surfactant
2.0% soap
34.8% zeolite A
4.2% polycarboxylate
0.5% phosphonic acid
4.1% corrosion inhibitor
1.1% magnesium silicate
1.1% greying inhibitor (CMC)
2.2% sodium sulfate
4.1% sodium citrate

Bleaching component:
17% sodium percarbonate
5% activator TAED
Metal complex: 2,400 ppm
Detergent concentration: 5 g/l

As a comparison, the base recipe plus percarbonate/TAED, but without a metal complex (= catalyst) was always run (CE1). This change in reflection compared with the starting fabrics is subtracted from the change in reflection achieved with percarbonate/TAED/bleaching catalyst.

The results follow from the table:

**Table:**

| | Complex | | | Morin test transmission | Washing test (ΔR) |
|---|---|---|---|---|---|
| No. | M | L | X or Y | | |
| 3 | Co | TTBP | | 94.8 | 0.2 |
| 4 | Co | PBOMA | Y=N (CH₃)₄⁺ | 94.8 | 1.9 |
| 5a | Co | OPBA | | 13 | 1.5 |
| 5b | Cu | OPBA | | 13.8 | n.d. |
| 5c | Fe | OPBA | | 5.8 | n.d. |
| 6 | Mn | OPBA ) | X=(µO)₂ Y= (Na⁺ | 4.2 | n.d. |
| 7 | Mn | BPEN | | 8 | n.d. |
| 8a | Co | PCADB | X= (Cl⁻)₂ Y= (Na⁺)₄ | 6.2 | n.d. |
| 8b | Fe | PCADB | X=(Cl⁻)₂ Y=(Na⁺)₄ | 46 | n.d. |

The test results show that the catalysts according to the invention, in particular cobalt complexes, lead to a high increase in the activity of the peroxyacetic acid formed in situ from an activator (TAED) and perborate.

## Claims

1. Use of a transition metal complex with at least one nitrogen-containing polydentate ligand as a bleaching catalyst for activation of a peroxy compound or of oxygen, wherein
the complex is mono- or polynuclear, the transition metal (M) is manganese, iron, cobalt or copper and the nitrogen-containing polydentate ligand (L), at least one of which is present, has the general formula (I) 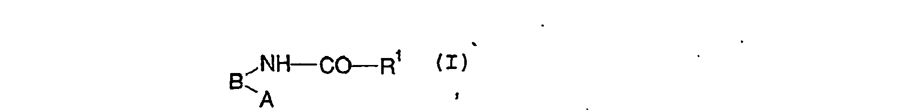 wherein A represents either the group -NH-CO-R² or the group 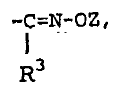 the bridge member B is chosen from the series consisting of 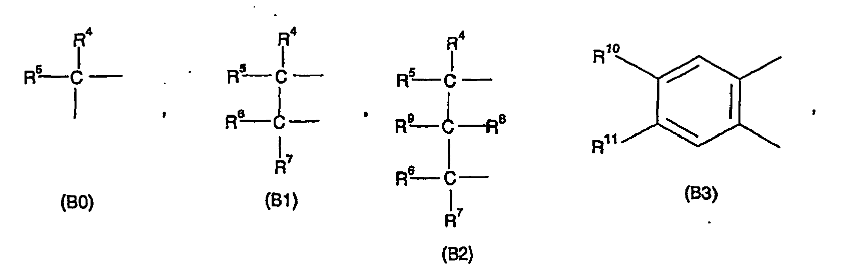 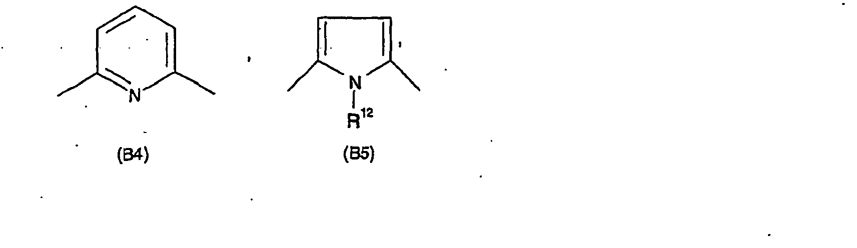 radical from the series consisting of H, arylalkyl, aryl, heteroaryl,
wherein R⁴ with R⁵ or/and R⁶ with R⁷ or R⁴ with R⁶ together with the atom(s) carrying them can form a five- to seven-membered cycloaliphatic or O- or N-heterocyclic ring, which can also contain a double bond, and wherein the structural elements of the general formulae (80) to (B5) have a total of 2 to 20 C atoms,
R⁸ and R⁹ independently of one another can represent a radical from the series consisting of H, methyl or together can represent carbonyl oxygen,
R¹⁰ and R¹¹ independently of one another can represent a radical from the series consisting of H, (C₁-C₄)alkyl, halogen or together can represent a fused-on aromatic ring
and R¹² can represent H or methyl,
the radicals R¹ and R² independently of one another can represent a radical from the series consisting of -COOH, -CONH₂, -CONHR¹³, C(CH₃)₂OH, 2-pyridyl, 1,3-oxazolin-2-yl, imidazol-2-yl or R¹-R² together can represent the radical 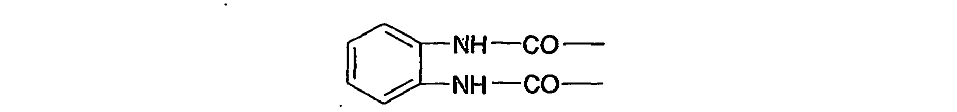 or 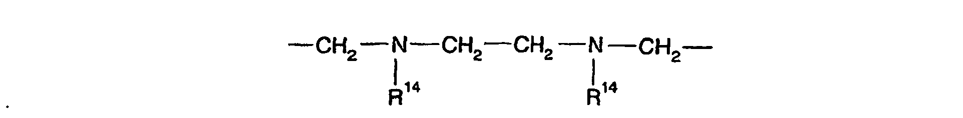 wherein R¹³ can be chosen from the series consisting of linear, branched or cyclic alkyl, aryl, heteroaryl, in particular 2-pyridyl, 1,3-oxazolin-2-yl and imidazol-2-yl and heteroalkylmethyl,
R¹⁴ can be chosen from the series consisting of substituted or unsubstituted, linear, branched or cyclic alkyl, benzyl, aryl, heteroaryl, heteroarylmethyl, and R³ represents a radical from the series consisting of alkyl, aryl, heteroaryl, arylalkyl, heteroarylalkyl and Z represents H, alkyl, aryl, dialkylaminoethyl, heteroaryl
and in the case of the oximes R¹ additionally can represent the radical 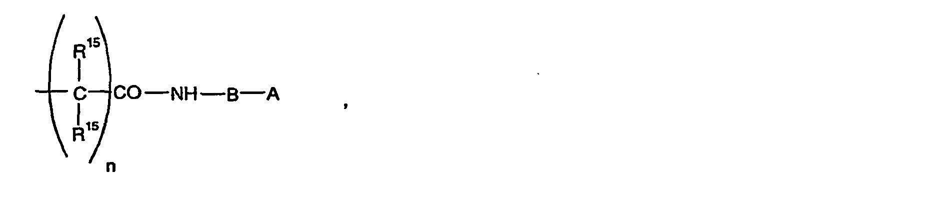 wherein n is 0 or 1, R¹⁵ can be H or alkyl and R¹⁵ -C-R¹⁵ can be cycloalkyl.

2. Use according to claim 1,
**characterized in that**
the ligand L has the general formula
B(-NH-CO-R¹)₂ (I')
wherein B represents unsubstituted or substituted ortho-phenylene, wherein the substituents can be bonded in particular in the 4,5-position and can be Cl; F or CH₃, and/or R¹ is chosen from the series consisting of COOH, CO-NH-CH₃, C(CH₃)₂OH, 2-pyridyl, 1,3-oxazolin-2-yl and imidazol-2-yl or R¹ represents a radical from the series consisting of phenylenediamine-N,N'-dicarbonyl or 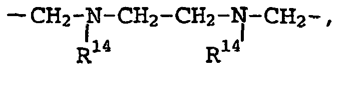 where R¹⁴ is -CH₂-COOH.

3. Use according to claim 1 or 2,
**characterized in that**
the ligand L in the diamide-dioxime corresponds to the general formula
CR₂³ (CO-NH-B-CR³=N-OH)₂,
wherein B represents substituted ortho-phenylene and R³ represents methyl.

4. Use according to one of claims 1 to 3
**characterized in that**
the complex has the general formula [LₘMₙXₒ]Yₚ,
wherein L denotes a ligand according to one of claims 1 to 3
M denotes a transition metal from the series consisting of Mn(II) to Mn(IV), Fe(II), Fe(III), Co (II), Co(III), Cu(I) and Cu(II), in particular Co (II) or Co (III),
X denotes a coordinating neutral or charged mono- or polyvalent ligand for saturation of the ligand sphere and
Y denotes a non-coordinating counter-ion which can be anionic or, if the sum of anionic substituents in the ligand L exceeds the sum of the valency of the metal atoms M, can also be cationic,
m denotes an integer in the range from 1 to 4, in particular 1 or 2,
n denotes the number 1 or 2,
o denotes zero or an integer in the range from 1 to 8 and
p denotes zero or an integer in the range from 1 to 8, in order to achieve complete charge compensation.

5. Use according to claim 4,
**characterized in that**,
a complex of the general formula [LMXₒ]Yₚ or [L₂M₂Xₒ]Yₚ, wherein the bridge member B of the ligand B(NH-CO-R¹)₂ denotes ortho-phenylene or 4,5-dichlorophenylene and R¹ denotes a radical from the series consisting of COOH, CONHCH₃, C(CH₃)₂OH and 2-pyridyl, is employed.

6. Use according to one of claims 1 to 5,
**characterized in that**
hydrogen peroxide or a peroxycarboxylic acid having 2 to 18 C atoms, which can also have been formed in situ from a source of hydrogen peroxide and an activator from the series consisting of O-acyl or N-acyl compounds, is activated.

7. Use according to one of claims 1 to 6
**characterized in that**
the transition metal complex is employed in an amount of 0.0001 to 50 wt.%, based on the peroxy compound.

8. Bleaching agent composition comprising a peroxy compound and a transition metal complex in an amount effective for activation of the peroxy compound,
**characterized in that**
it comprises a transition metal complex according to one of claims 1 to 5.

9. Bleaching agent composition according to claim 8,
**characterized in that**
the peroxy compound is chosen from the series consisting of hydrogen peroxide, a source of hydrogen peroxide, in particular an alkali metal perborate monohydrate or tetrahydrate or alkali metal percarbonate, a peroxycarboxylic acid having 2 to 18 C atoms or a combination of a source of hydrogen peroxide and a peroxycarboxylic acid precursor, in particular an O-acyl or N-acyl compound, or from mixtures thereof.

10. Bleaching agent composition according to claim 8 or 9,
**characterized in that**
it additionally comprises one or more surfactants, in particular wash-active surfactants.

11. Bleaching agent composition according to one of claims 8 to 10,
**characterized in that**
it additionally comprises builders, in particular zeolites.

12. Bleaching agent composition according to claim 10 or 11,
**characterized in that**
it is a constituent of a washing, bleaching or cleaning composition comprising one or more surfactants and one or more builders.

13. Bleaching agent composition according to one of claims 8 to 12,
**characterized in that**
it comprises 0,0001 to 50 wt.%, in particular 0.01 to 20 wt.-% of a transition metal complex according to one of claims 1 to 5, based on the content of peroxy compound or precursor thereof.

## Patentansprüche

1. Verwendung eines Übergangsmetallkomplexes mit mindestens einem stickstoffhaltigen mehrzähnigen Liganden als Bleichkatalysator zur Aktivierung einer Peroxyverbindung oder von Sauerstoff, wobei der Komplex ein- oder mehrkernig ist, das Übergangsmetall (M) Mangan, Eisen, Kobalt oder Kupfer ist und der mindestens eine stickstoffhaltige mehrzähnige Ligand (L) die allgemeine Formel (I) 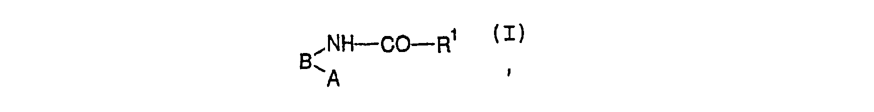 aufweist, wobei A entweder für die Gruppe -NH-CO-R² oder die Gruppe 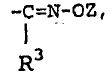 steht,
das Brückenglied B ausgewählt ist aus der Reihe 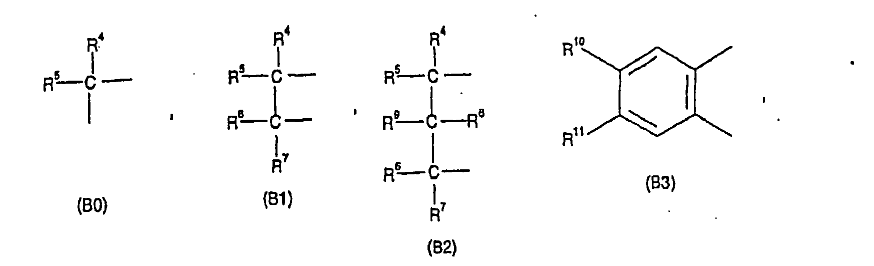 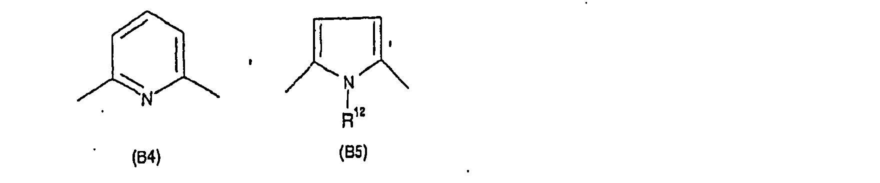 wobei R⁴ bis R⁷ unabhängig voneinander für einen Rest aus der Reihe H, Arylalkyl, Aryl, Heteroaryl stehen,
wobei R⁴ mit R⁵ oder/und R⁶ mit R⁷ oder R⁴ mit R⁶ gemeinsam mit dem/den sie tragenden Atom/en einen fünf- bis siebengliedrigen cycloaliphatischen oder O- oder N-heterocyclischen Ring, der auch eine Doppelbindung aufweisen kann, bilden können,
und wobei die Strukturelemente der allgemeinen Formeln (B0) bis (B5) insgesamt 2 bis 20 C-Atome aufweisen,
R⁸ und R⁹ unabhängig voneinander für einen Rest aus der Reihe H, Methyl oder gemeinsam für Carbonylsauerstoff stehen können,
R¹⁰ und R¹¹ unabhängig voneinander für einen Rest aus der Reihe H, (C₁-C₄)-Alkyl, Halogen oder gemeinsam für einen annellierten aromatischen Ring stehen können
und R¹² für H oder Methyl stehen kann,
die Reste R¹ und R² unabhängig voneinander für einen Rest aus der Reihe -COOH, -CONH₂, -CONHR¹³, C(CH₃)₂OH, 2-Pyridyl, 1,3-Oxazolin-2-yl, Imidazol-2-yl oder R¹-R² gemeinsam für den Rest 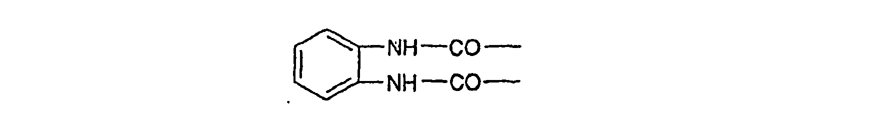 oder 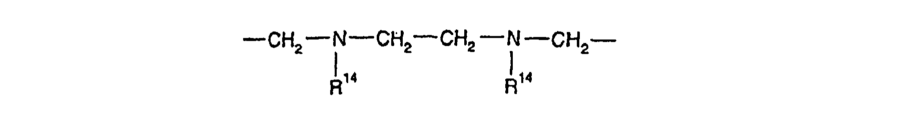 stehen können,
wobei R¹³ ausgewählt sein kann aus der Reihe lineares, verzweigtes oder cyclisches Alkyl, Aryl, Heteroaryl, insbesondere 2-Pyridyl, 1,3-Oxazolin-2-yl und Imidazol-2-yl und Heteroalkylmethyl,
R¹⁴ ausgewählt sein kann aus der Reihe substituiertes oder unsubstituierters, lineares, verzweigtes oder cyclisches Alkyl, Benzyl, Aryl, Heteroaryl, Heteroarylmethyl, und
R³ für einen. Rest aus der Reihe Alkyl, Aryl, Heteroaryl, Arylalkyl, Heteroarylalkyl und Z für H, Alkyl, Aryl, Dialkylaminoethyl, Heteroaryl steht
und bei den Oximen R¹ zusätzlich für den Rest 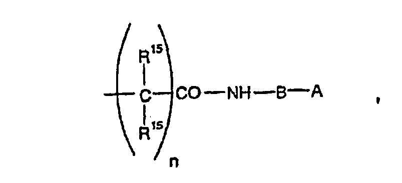 stehen kann, wobei n gleich 0 oder 1 ist, R¹⁵ H oder Alkyl sein kann und R¹⁵-C-R¹⁵ Cycloalkyl sein kann.

2. Verwendung nach Anspruch 1, **dadurch gekennzeichnet, daß** der Ligand L die allgemeine Formel
B(-NH-CO-R¹)₂ (I')
aufweist, wobei B für unsubstituiertes oder substituiertes ortho-Phenylen steht, wobei die Substituenten insbesondere in 4,5-Position gebunden sein können und C1, F oder CH₃ sein können, und/oder R¹ ausgewählt ist aus der Reihe COOH, CO-NH-CH₃, C(CH₃)₂OH, 2-Pyridyl, 1,3-Oxazolin-2-yl und Imidazol-2-yl oder R¹ für einen Rest aus der Reihe Phenylendamin-N,N'-dicarbonyl oder 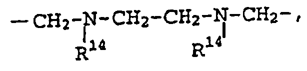 mit R¹⁴ gleich -CH₂-COOH steht.

3. Verwendung nach Anspruch 1 oder 2, **dadurch gekennzeichnet, daß** der Ligand L in Diamid-dioxim der allgemeinen Formel
CR₂³ (CO-NH-B-CR³=N-OH) ₂,
entspricht, wobei B für substituiertes ortho-Phenylen steht und R³ für Methyl steht.

4. Verwendung nach einem der Ansprüche 1 bis 3, **dadurch gekennzeichnet, daß** der Komplex die allgemeine Formel [LₘMₙXₒ]Yₚ aufweist,
wobei L einen Ligand gemäß einem der Ansprüche 1 bis 3 bedeutet,
M ein Übergangsmetall aus der Reihe Mn(II) bis Mn(IV), Fe(II), Fe(III), Co(II), Co(III), Cu(I) und Cu(II), insbesondere Co(II) oder Co(III), bedeutet,
X einen koordinierenden neutralen oder geladenen ein- oder mehrwertigen Liganden zur Absättigung der Ligandensphäre bedeutet und
Y ein nicht koordinierendes Gegenion bedeutet, das anionisch oder, sofern die Summe anionischer Substituenten im Liganden L die Summe der Wertigkeit der Metallatome M übersteigt, auch kationisch sein kann,
m eine ganze Zahl im Bereich von 1 bis 4, insbesondere 1 oder 2, bedeutet,
n die Zahl 1 oder 2, bedeutet,
o null oder eine ganze Zahl im Bereich von 1 bis 8 bedeutet und
p null oder eine ganze Zahl im Bereich von 1 bis 8 zum vollständigen Ladungsausgleich bedeutet.

5. Verwendung nach Anspruch 4, **dadurch gekennzeichnet, daß** ein Komplex der allgemeinen Formel [LMXₒ]Yₚ oder [L₂M₂Xₒ] Yₚ, wobei das Brückenglied B des Liganden B(NH-CO-R¹)₂ ortho-Phenylen oder 4,5-Dichlorphenylen bedeutet und R¹ einen Rest aus der Reihe COOH, CONHCH₃, C(CH₃)₂OH und 2-Pyridyl bedeuten, eingesetzt wird.

6. Verwendung nach einem der Ansprüche 1 bis 5, **dadurch gekennzeichnet, daß** Wasserstoffperoxid oder eine Peroxycarbonsäure mit 2 bis 18 C-Atomen, welche auch in situ aus einer Quelle für Wasserstoffperoxid und einem Aktivator aus der Reihe der O-Acyl- oder N-Acylverbindungen gebildet worden sein kann, aktiviert wird.

7. Verwendung nach einem der Ansprüche 1 bis 6, **dadurch gekennzeichnet, daß** der Übergangsmetallkomplex in einer Menge von 0,0001 bis 50 Gew.-%, bezogen auf die Peroxyverbindung, eingesetzt wird.

8. Bleichmittelzusammensetzung, enthaltend eine Peroxyverbindung und einen Übergangsmetallkomplex in einer zur Aktivierung der Peroxyverbindung wirksamen Menge, **dadurch gekennzeichnet, daß** sie einen Übergangsmetallkomplex gemäß einem der Ansprüche 1 bis 5 enthält.

9. Bleichmittelzusammensetzung nach Anspruch 8, **dadurch gekennzeichnet, daß** die Peroxyverbindung ausgewählt ist aus der Reihe Wasserstoffperoxid, einer Quelle für Wasserstoffperoxid, insbesondere Alkalimetallperborat-monohydrat oder -tetrahydrat oder Alkalimetallpercarbonat, einer Peroxycarbonsäure mit 2 bis 18 C-Atomen oder einer Kombination aus einer Quelle für Wasserstoffperoxid und einer Peroxycarbonsäure-Vorstufe, insbesondere einer 0-Acyl- oder N-Acylverbindung, oder aus Gemischen davon.

10. Bleichmittelzusammensetzung nach Anspruch 8 oder 9, **dadurch gekennzeichnet, daß** sie zusätzlich ein oder mehrere Tenside, insbesondere waschaktive Tenside enthält.

11. Bleichmittelzusammensetzung nach einem der Ansprüche 8 bis 10, **dadurch gekennzeichnet, daß** sie zusätzlich Builder, insbesondere Zeolithe, enthält.

12. Bleichmittelzusammensetzung nach Anspruch 10 oder 11, **dadurch gekennzeichnet, daß** sie Bestandteil eines ein oder mehrere Tenside und ein oder mehrere Builder enthaltenden Wasch-, Bleich- oder Reinigungsmittels ist.

13. Bleichmittelzusammensetzung nach einem der Ansprüche 8 bis 12, **dadurch gekennzeichnet, daß** sie 0,0001 bis 50 Gew.-% und insbesondere 0,01 bis 20 Gew.-% eines Übergangsmetallkomplexes gemäß einem der Ansprüche 1 bis 5, bezogen auf den Gehalt an Peroxyverbindung oder Vorstufe davon, enthält.

## Revendications

1. Utilisation d'un complexe de métal de transition contenant au moins un ligand polydenté azoté en tant que catalyseur de blanchiment pour l'activation d'un composé peroxy ou d'oxygène, dans laquelle le complexe est mono- ou polynucléaire, le métal de transition (M) est le manganèse, le fer, le cobalt ou le cuivre et le ligand polydenté azoté (L), dont un au moins est présent, a pour formule générale (I): 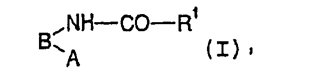 dans laquelle A représente soit le groupe -NH-CO-R² soit le groupe 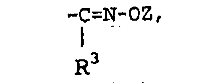 l'élément pontant B est choisi dans la série constituée par 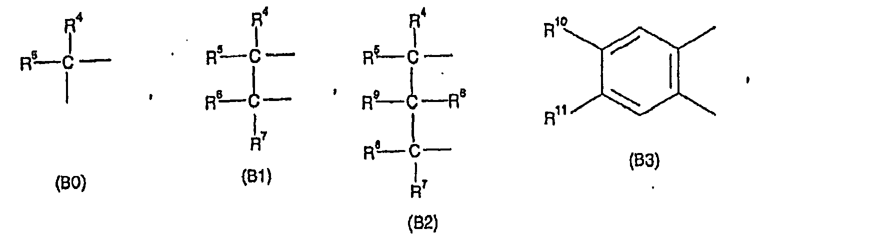 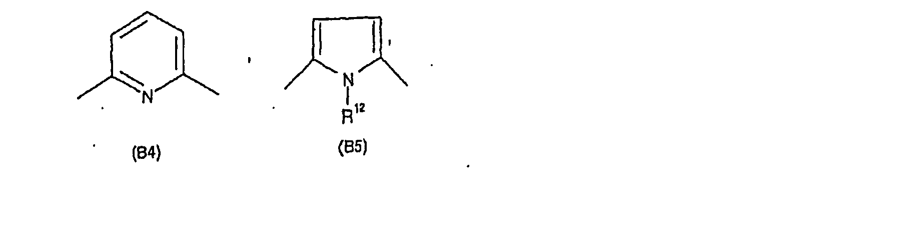 dans laquelle R⁴ à R⁷, indépendamment les uns des autres représentent un radical choisi dans la série constituée par H ou un groupe arylalkyle, aryle, hétéroaryle, dans laquelle R⁴ avec R⁵ et/ou R⁶ avec R⁷ ou R⁴ avec R⁶, conjointement avec le ou les atomes au(x)quel(s) ils sont fixés, peuvent former un noyau cycloaliphatique ou O- ou N-hétérocyclique à cinq à sept chaînons, qui peut aussi contenir une double liaison,
et dans laquelle les éléments structuraux des formules générales (B0) à (B5) possèdent un total de 2 à 20 atomes de C,
R⁸ et R⁹, indépendamment les uns des autres, peuvent représenter un radical de la série constituée par H ou un groupe méthyle, ou peuvent représenter ensemble un oxygène de carbonyle,
R¹⁰ et R¹¹, indépendamment les uns des autres, peuvent représenter un radical de la série constituée par H, un groupe alkyle en C₁-C₄ et un halogène, ou peuvent représenter ensemble un noyau aromatique condensé,
et R¹² peut représenter H ou un groupe méthyle,
les radicaux R¹ et R², indépendamment les uns des autres, peuvent représenter un radical de la série constituée par les groupes -COOH, -CONH₂, -CONHR¹³, C(CH₃)₂OH, 2-pyridyle, 1,3-oxazolin-2-yle, imidazol-2-yle, ou bien R¹-R² peuvent représenter ensemble le radical 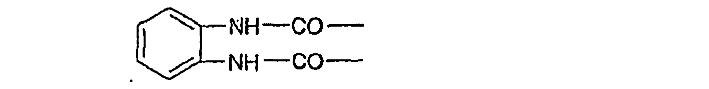 ou 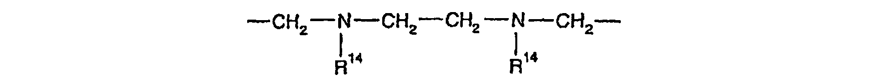 dans lequel R¹³ peut être choisi dans la série constituée par les groupes alkyle linéaires, ramifiés ou cycliques, aryle, hétéroaryle, en particulier 2-pyridyle, 1,3-oxazolin-2-yle et imidazol-2-yle, et hétéroalkylméthyle,
R¹⁴ peut être choisi dans la série constituée par les groupes alkyle linéaires, ramifiés ou cycliques, benzyle, aryle, hétéroaryle, hétéroarylméthyle, substitués ou non substitués, et
R³ représente un radical de la série constituée par les groupes alkyle, aryle, hétéroaryle, arylalkyle, hétéroarylalkyle et
Z représente H ou un groupe alkyle, aryle, dialkylaminoéthyle ou hétéroaryle,
et, dans le cas des oximes, R¹ peut représenter en outre le radical 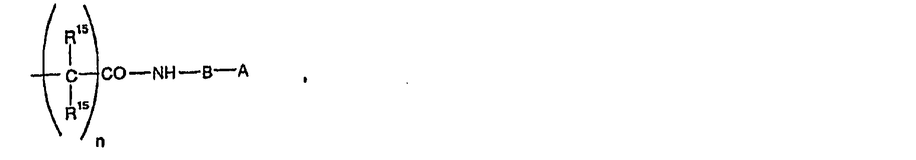 dans lequel n vaut 0 ou 1, R¹⁵ peut être H ou un groupe alkyle et R¹⁵-C-R¹⁵ peut être un groupe cycloalkyle.

2. Utilisation selon la revendication 1, **caractérisée en ce que** le ligand L a pour formule générale
B(-NH-CO-R¹)₂ (I')
dans laquelle B représente un groupe ortho-phénylène non substitué ou substitué, dans lequel les substituants peuvent être fixés en position 4,5 et peuvent être Cl, F ou CH₃, et/ou R¹ est choisi dans la série constituée par les groupes COOH, CO-NH-CH₃, C(CH₃)_{z}OH, 2-pyridyle, 1,3-oxazolin-2-yle et imidazol-2-yle ou R¹ représente un radical de la série constituée par les groupes phénylènediamine-N,N'-dicarbonyle et 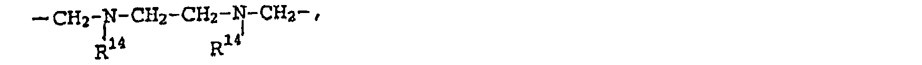 où R¹⁴ est -CH₂-COOH.

3. Utilisation selon la revendication 1 ou 2, **caractérisée en ce que** le ligand L dans la diamide-dioxime répond à la formule générale
CR₂³(CO-NH-B-CR³=N-OH)₂,
dans laquelle B représente un groupe ortho-phénylène substitué et R³ représente un groupe méthyle.

4. Utilisation selon l'une des revendications 1 à 3, **caractérisée en ce que** le complexe a pour formule générale [LₘMₙXₒ]Yₚ, dans laquelle
L désigne un ligand selon l'une quelconque des revendications 1 à 3;
M désigne un métal de transition choisi dans la série constituée par Mn(II) à Mn (IV), Fe (II), Fe (III), Co(II), Co(III), Cu(I) et Cu(II), en particulier Co(II) ou Co(III),
X désigne un ligand de coordination mono- ou polyvalent, neutre ou chargé, pour la saturation de la sphère de ligand,
Y désigne un contre-ion qui n'est pas un ion de coordination et qui peut être anionique ou, si la somme des substituants anioniques dans le ligand L est supérieure à la somme de la valence des atomes de métal M, peut aussi être cationique,
m désigne un nombre entier dans la gamme de 1 à 4, en particulier 1 ou 2,
n désigne le nombre 1 ou 2,
o désigne zéro ou un nombre entier dans la gamme de 1 à 8 et
p désigne zéro ou un nombre entier dans la gamme de 1 à 8, afin d'obtenir une compensation complète des charges.

5. Utilisation selon la revendication 4, **caractérisée en ce que** l'on emploie un complexe de formule générale [LMXₒ] Yₚ ou [L₂M₂Xₒ]Yₚ, dans laquelle l'élément pontant B du ligand B(NH-CO-R¹)₂ désigne le groupe ortho-phénylène ou 4,5-dichlorophénylène et R¹ désigne un radical de la série constituée par COOH, CONHCH₃, C(CH₃)₂OH et 2-pyridyle.

6. Utilisation selon l'une des revendications 1 à 5, **caractérisée en ce que** l'on active du peroxyde d'hydrogène ou un acide peroxycarboxylique comportant 2 à 18 atomes de C, qui peut aussi avoir été formé in situ à partir d'une source de peroxyde d'hydrogène et d'un activateur de la série constituée par les composés O-acyle ou N-acyle.

7. Utilisation selon l'une des revendications 1 à 6, **caractérisée en ce que** le complexe de métal de transition est employé à raison de 0,0001 à 50% en poids, par rapport au composé peroxy.

8. Composition d'agent de blanchiment comprenant un composé peroxy et un complexe de métal de transition en quantité efficace pour l'activation du composé peroxy, **caractérisée en ce qu'**elle comprend un complexe de métal de transition selon l'une des revendications 1 à 5.

9. Composition d'agent de blanchiment selon la revendication 8, **caractérisée en ce que** le composé peroxy est choisi dans la série constituée par le peroxyde d'hydrogène, une source de peroxyde d'hydrogène, en particulier un monohydrate ou tétrahydrate de perborate de métal alcalin ou un percarbonate de métal alcalin, un acide peroxycarboxylique comportant 2 à 18 atomes de C ou une combinaison d'une source de peroxyde d'hydrogène et d'un précurseur d'acide peroxycarboxylique, en particulier d'un composé O-acyle ou N-acyle, ou de leurs mélanges.

10. Composition d'agent de blanchiment selon la revendication 8 ou 9, **caractérisée en ce qu'**elle comprend en plus un ou plusieurs tensioactifs, en particulier des tensioactifs actifs pour le lavage.

11. Composition d'agent de blanchiment selon l'une des revendications 8 à 10, **caractérisée en ce qu'**elle comprend en plus des adjuvants, en particulier des zéolites.

12. Composition d'agent de blanchiment selon la revendication 10 ou 11, **caractérisée en ce qu'**elle est un constituant d'une composition de lavage, de blanchiment ou de nettoyage comprenant un ou plusieurs tensioactifs et un ou plusieurs adjuvants.

13. Composition d'agent de blanchiment selon l'une des revendications 8 à 12, **caractérisée en ce qu'**elle comprend 0,0001 à 50% en poids, en particulier 0,01 à 20% en poids, d'un complexe de métal de transition selon l'une des revendications 1 à 5, par rapport à la teneur en composé peroxy ou en son précurseur.
